# FASCICULE DE BREVET EUROPEEN

(11) **EP 1 517 211 B1**
(45) Date de publication et mention de la délivrance du brevet: **04.10.2006**
(21) Numéro de dépôt: 04291985.2
(22) Date de dépôt: 04.08.2004
(51) Int. Cl.: G05D 1/06

(54) **Procédé et dispositif d'évitement de terrain pour un aéronef**
Verfahren und Vorrichtung zur Bodenkollisionsvermeidung eines Flugzeuges
Ground avoidance device and method for an aircraft

(30) Priorité: 18.09.2003 FR 0310962
(43) Date de publication de la demande: 23.03.2005
(73) Titulaire: AIRBUS France, 31060 Toulouse (FR)
(72) Inventeur: Jourdan, Christophe, 31400 Toulouse (FR); Foucart, Vincent, 31520 Ramonville Saint Agne (FR)
(74) Mandataire: Bonnetat, Christian

(56) Documents cités:
- US-A- 3 988 713
- US-A- 4 924 401
- US-A- 5 957 412
- US-A- 6 088 654

## Description

La présente invention concerne un procédé et un dispositif d'évitement de terrain pour un aéronef.

On sait que de nombreux aéronefs, notamment des avions de transport civil, sont équipés d'un dispositif d'alerte de collision permettant d'émettre un signal d'alerte en cas de risque de collision de l'aéronef avec le terrain. Concernant le dispositif d'alerte de collision, il peut s'agir notamment d'un dispositif de type TAWS ("Terrain Awareness and Warning System" en anglais, c'est-à-dire "système d'alerte et de prise de conscience du terrain" en français), de type EGPWS ("Enhanced Ground Proximity Warning System" en anglais, c'est-à-dire "système amélioré d'alerte de proximité du sol" en français) ou de type GCAS ("Ground Collision Avoidance System" en anglais, c'est-à-dire "système d'évitement de collision avec le sol" en français).

Un tel dispositif d'alerte de collision est généralement apte à engendrer deux signaux d'alerte relatifs à des niveaux d'alerte différents, à savoir un avertissement (ou "caution" en anglais) et une alerte (ou "warning" en anglais). Généralement, un avertissement est émis environ 60 secondes avant une collision potentielle de l'aéronef avec le terrain, lorsque le risque d'une telle collision est détecté. Si ce risque de collision est toujours avéré environ 30 secondes avant l'impact prévu de l'aéronef avec le terrain, ledit dispositif d'alerte de collision émet une alerte. Bien entendu, en cas d'alerte, le pilote doit réagir immédiatement. En revanche, en cas d'avertissement, le(s) pilote(s) de l'aéronef est(sont) censé(s) vérifier la réalité du risque potentiel de collision avec le terrain et modifier sa trajectoire si ce risque est avéré de façon à éviter une telle collision. Toutefois, il peut arriver que des pilotes ne réagissent pas de façon satisfaisante aux signaux d'alerte issus d'un dispositif d'alerte de collision, au risque d'entraîner la destruction de l'aéronef lors d'une collision avec le terrain.

Le brevet US-4 924 401 propose une solution visant à éviter une collision de l'aéronef avec le terrain. Cette solution consiste à définir une altitude minimale au-dessous de laquelle l'aéronef ne doit pas descendre et à piloter automatiquement l'aéronef au moyen du pilote automatique, lorsque cette altitude minimale est franchie en descente, de façon à commander une remontée de l'aéronef et empêcher ainsi toute collision avec le terrain.

Toutefois, cette solution connue est surtout adaptée au cas où le pilote est inconscient alors que l'aéronef vole en piqué. De ce fait, elle présente l'inconvénient d'agir très tardivement sur la trajectoire de l'aéronef, et l'action sur cette trajectoire est bien entendu d'autant plus importante qu'elle est tardive. Par conséquent, dans le cas d'un avion de transport civil, il en résulte une situation d'inconfort, voire de danger potentiel pour les passagers.

De plus, le risque que cette action sur la trajectoire ne permette pas de protéger l'aéronef d'une collision avec le terrain, est lui aussi élevé, en raison de cette action tardive.

La présente invention a pour objet de remédier à ces inconvénients. Elle concerne un procédé d'évitement de terrain pour un aéronef, qui est particulièrement efficace.

A cet effet, ledit procédé selon lequel on utilise un dispositif d'alerte de collision susceptible d'émettre :
- un avertissement, lorsque l'aéronef risque une collision avec le terrain à la fin d'une première durée prédéterminée, s'il maintient ses caractéristiques de vol (pente, vitesse, ...) actuelles ; et
- une alerte, lorsque l'aéronef risque une collision avec le terrain à la fin d'une seconde durée prédéterminée, s'il maintient ses caractéristiques de vol actuelles, ladite seconde durée prédéterminée étant inférieure à ladite première durée prédéterminée,
est remarquable, selon l'invention, en ce que :
a) si ledit dispositif d'alerte de collision émet un avertissement, on soumet automatiquement l'aéronef au moins à un ordre de remontée avec une première pente correspondant à une valeur prédéterminée ; et
b) si ledit dispositif d'alerte de collision émet une alerte, un pilote automatique de l'aéronef, qui est engagé automatiquement s'il est désengagé au moment de l'émission de ladite alerte, force automatiquement et exclusivement l'aéronef à une remontée avec une seconde pente correspondant à la pente maximale possible dans les conditions de vol (masse, altitude, ...) actuelles de l'aéronef.

Le procédé conforme à l'invention présente l'avantage d'agir précocement sur la trajectoire de l'aéronef de façon à éviter une collision de celui-ci avec le terrain. En effet, ce procédé permet de mettre l'aéronef sur une pente positive (remontée) dès qu'un avertissement est émis même si le pilote ne réagit pas à cet avertissement. Ainsi, dès l'émission d'un avertissement, on agit de façon à améliorer la situation de l'aéronef par rapport au terrain en augmentant son altitude (ou en réduisant la baisse de son altitude).

De plus, cette action correspond à une première pente qui est de préférence modérée, généralement de l'ordre de quelques degrés (par exemple 2°), dont l'effet n'est donc pas pénalisant pour le confort des passagers.

En outre, si le pilote ne réagit pas à un avertissement et/ou si la remontée de l'aéronef engendrée grâce au procédé conforme à l'invention à la suite de cet avertissement n'est pas suffisante pour éviter tout risque de collision avec le terrain, le dispositif d'alerte de collision émet une alerte (par exemple environ 30 secondes avant l'impact prévu de l'aéronef avec le terrain). Dans un mode de réalisation préféré, on attend la fin d'une troisième durée prédéterminée (par exemple 5 secondes) pour laisser au pilote la possibilité d'effectuer alors une action destinée à éviter une collision avec le terrain. Si à la fin de cette troisième durée prédéterminée, le pilote n'a effectué aucune action visant à éviter la collision (ou s'il n'a pas éteint l'alerte engendrée par ledit dispositif d'alerte de collision, dans le cas où cette alerte lui paraît erronée), le pilote automatique engage automatiquement une remontée de l'aéronef à pente maximale.

Par ailleurs, de façon avantageuse, dans le cas où le pilote exerce une action sur un organe de commande de l'aéronef, à l'étape a), on ajoute ledit ordre de remontée à l'ordre qui est engendré par ladite action du pilote sur ledit organe de commande.

Ainsi, l'aéronef ne peut être maintenu en descente (pente négative) qu'en cas d'action volontaire et maintenue du pilote sur l'organe de commande (par exemple un manche). En cas d'avertissement, l'aéronef a donc tendance à remonter, sauf s'il y a une action volontaire du pilote pour le faire descendre. De plus, le fait que l'aéronef remonte sans action volontaire du pilote présente l'avantage de contribuer à une prise de conscience par le pilote du risque de collision avec le terrain (puisque de façon habituelle, l'aéronef ne monte pas sans action volontaire du pilote).

Par ailleurs, de façon avantageuse, dans le cas où l'aéronef est en montée, notamment en l'absence d'action du pilote sur un organe de commande dudit aéronef, à l'étape a), on ajoute ledit ordre de remontée à la pente correspondant à cette montée.

Selon l'invention :
- lorsque le pilote automatique est engagé lors de l'émission d'un avertissement, ledit pilote automatique commande (au moyen d'une première fonction intégrée) une pente correspondant à ladite valeur prédéterminée ;
- lorsque le pilote automatique est désengagé lors de l'émission d'un avertissement, si l'aéronef comporte des commandes électriques de vol, la pente de l'aéronef est maintenue sur ladite valeur prédéterminée, en l'absence d'une action du pilote, par un calculateur gérant les lois de pilotage desdites commandes électriques de vol ; et
- dans le cas d'une action du pilote sur un organe de commande de l'aéronef, l'ordre ou la consigne de pente correspondant à cette action du pilote, est ajoutée à ladite valeur prédéterminée par le calculateur (gérant les ordres engendrés par l'actionnement de l'organe de commande).

On notera qu'il existe une continuité des modes de pilotage selon que le pilote automatique est engagé ou désengagé. Cela permet une cohérence de comportement de l'aéronef quel que soit le mode de pilotage choisi par le pilote.

Par ailleurs, de façon avantageuse, à l'étape b), le pilote automatique force l'aéronef à une remontée avec une poussée engendrée par des moteurs de l'aéronef, correspondant à la poussée maximale possible dans les conditions de vol actuelles de l'aéronef.

On notera que le procédé conforme à l'invention permet une réaction progressive selon le niveau de l'alarme : une première réaction modérée en cas d'avertissement, puis une réaction plus brusque en cas d'alerte. Cela permet d'anticiper le plus tôt possible une remontée sans affecter notablement le confort des passagers, puis de n'engager une montée brusque que lorsque celle-ci devient indispensable pour sauver l'aéronef d'un risque de collision.

En outre, avantageusement, à l'étape b), le pilote automatique force la remontée de l'aéronef, en maintenant l'angle d'incidence de l'aéronef inférieur à une valeur maximale autorisée, relativement à la protection par rapport au décrochage.

La présente invention concerne également un dispositif d'évitement de terrain pour un aéronef.

Selon l'invention, ledit dispositif du type comportant un dispositif d'alerte de collision susceptible d'émettre :
- un avertissement, lorsque l'aéronef risque une collision avec le terrain à la fin d'une première durée prédéterminée, s'il maintient ses caractéristiques de vol actuelles ; et
- une alerte, lorsque l'aéronef risque une collision avec le terrain à la fin d'une seconde durée prédéterminée, s'il maintient ses caractéristiques de vol actuelles, ladite seconde durée prédéterminée étant inférieure à ladite première durée prédéterminée,
est remarquable en ce qu'il comporte de plus un système de pilotage de l'aéronef, comprenant au moins :
- un moyen de pilotage permettant de soumettre automatiquement l'aéronef au moins à un ordre de remontée avec une première pente correspondant à une valeur prédéterminée, lorsque ledit dispositif d'alerte de collision émet un avertissement ; et
- un pilote automatique qui est engagé automatiquement, s'il est désengagé au moment de l'émission d'une alerte par ledit dispositif d'alerte de collision, et qui force automatiquement et exclusivement l'aéronef à une remontée avec une seconde pente correspondant à la pente maximale possible dans les conditions de vol actuelles de l'aéronef, lors de l'émission d'une telle alerte par ledit dispositif d'alerte de collision.

De façon avantageuse :
- ledit moyen de pilotage comprend une première fonction qui est intégrée dans le pilote automatique et ladite première fonction soumet l'aéronef audit ordre de remontée, si ledit pilote automatique est engagé lors de l'émission d'un avertissement ; et/ou
- ledit système de pilotage comporte, de plus, au moins un organe de commande qui est susceptible d'être actionné par un pilote de l'aéronef, ledit moyen de pilotage comprend une seconde fonction qui est intégrée dans un calculateur gérant les ordres engendrés par l'actionnement dudit organe de commande, et ladite seconde fonction soumet l'aéronef audit ordre de remontée si ledit pilote automatique est désengagé lors de l'émission d'un avertissement.

Les figures du dessin annexé feront bien comprendre comment l'invention peut être réalisée. Sur ces figures, des références identiques désignent des éléments semblables.

La figure 1 est le schéma synoptique d'un dispositif d'évitement de terrain conforme à l'invention.

La figure 2 est un graphique permettant de présenter les étapes essentielles d'un procédé conforme à l'invention.

Les figures 3 et 4 sont deux vues schématiques montrant deux situations de vol différentes d'un aéronef, auxquelles on applique le procédé conforme à l'invention.

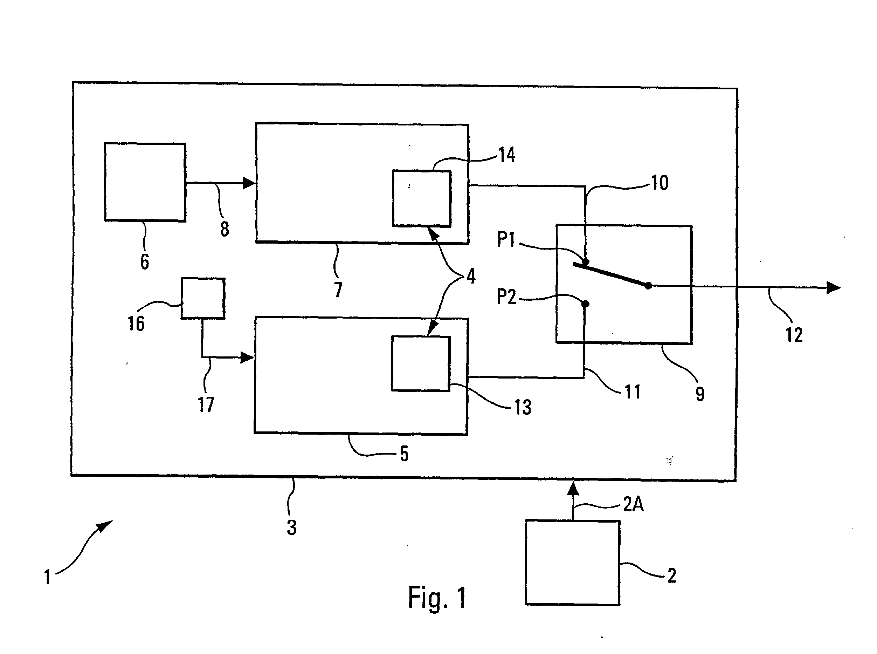

Le dispositif 1 conforme à l'invention et représenté schématiquement sur la figure 1 est un dispositif d'évitement du terrain (ou sol) S pour un aéronef A, en particulier un avion de transport civil.

Selon l'invention, ledit dispositif 1 comporte :
- un dispositif d'alerte de collision 2 de type usuel, qui est susceptible d'émettre :
   ■ un avertissement, lorsque l'aéronef A risque une collision avec le terrain S à la fin d'une première durée prédéterminée, par exemple 60 secondes, à partir de l'émission de l'avertissement, s'il maintient ses caractéristiques de vol (pente, vitesse, ...) actuelles ; et
   ■ une alerte, lorsque l'aéronef A risque une collision avec le terrain S à la fin d'une seconde durée prédéterminée, par exemple 30 secondes, à partir de l'émission de l'alerte, s'il maintient ses caractéristiques de vol actuelles ; et
- un système de pilotage 3 de l'aéronef A, qui est relié par une liaison 2A audit dispositif d'alerte de collision 2.

Concernant le dispositif d'alerte de collision 2, il peut notamment s'agir d'un dispositif de type TAWS ("Terrain Awareness and Warning System" en anglais, c'est-à-dire "système d'alerte et de prise de conscience du terrain" en français), de type EGPWS ("Enhanced Ground Proximity Warning System" en anglais, c'est-à-dire "système amélioré d'alerte de proximité du sol" en français) ou de type GCAS ("Ground Collision Avoidance System" en anglais, c'est-à-dire "système d'évitement de collision avec le sol" en français).

De plus, selon l'invention, ledit système de pilotage 3 de l'aéronef A, comprend :
- un moyen de pilotage 4 permettant de soumettre automatiquement l'aéronef A au moins à un ordre de remontée avec une première pente modérée correspondant à une valeur prédéterminée, par exemple 2°, lorsque ledit dispositif d'alerte de collision 2 émet un avertissement ; et
- un pilote automatique 5 qui est engagé automatiquement s'il est désengagé au moment de l'émission d'une alerte par ledit dispositif d'alerte de collision 2 et qui force automatiquement et exclusivement l'aéronef A à une remontée avec une seconde pente correspondant à la pente maximale possible dans les conditions de vol (masse, altitude, ...) actuelles de l'aéronef A, lors de l'émission d'une telle alerte.

Comme représenté sur la figure 1, le système de pilotage 3 comporte de plus :
- au moins un organe de commande 6, par exemple un manche ou un mini-manche, qui est susceptible d'être actionné par un pilote de l'aéronef A, au moins pour commander une modification de la pente de l'aéronef A ;
- un calculateur 7 qui est relié par une liaison 8 à l'organe de commande 6 et qui est destiné à gérer les ordres engendrés par l'actionnement de l'organe de commande 6. Si le système de pilotage 3 est du type à commandes de vol électriques ou optiques, ledit calculateur 7 est un calculateur usuel mettant en oeuvre les lois de pilotage dudit système de pilotage 3 ; et
- un moyen de commutation 9 qui est relié par des liaisons 10 et 11 respectivement audit calculateur 7 et audit pilote automatique 5 et qui, selon la position de commutation P1 ou P2, transmet, par l'intermédiaire d'une liaison 12, à des gouvernes usuelles non représentées de l'aéronef A, comme ordres de braquage de ces gouvernes, soit des ordres issus du calculateur 7, soit des ordres issus du pilote automatique 5.

Selon l'invention, ledit moyen de pilotage 4 comprend :
- une première fonction 13 qui est intégrée dans le pilote automatique 5. Ladite première fonction 13 soumet l'aéronef A audit ordre de remontée, si ledit pilote automatique 5 est engagé lors de l'émission d'un avertissement ; et
- une seconde fonction 14 qui est intégrée dans le calculateur 7 gérant les ordres engendrés par l'actionnement dudit organe de commande 6. Ladite seconde fonction 14 soumet l'aéronef A audit ordre de remontée, si ledit pilote automatique 5 est désengagé lors de l'émission d'un avertissement.

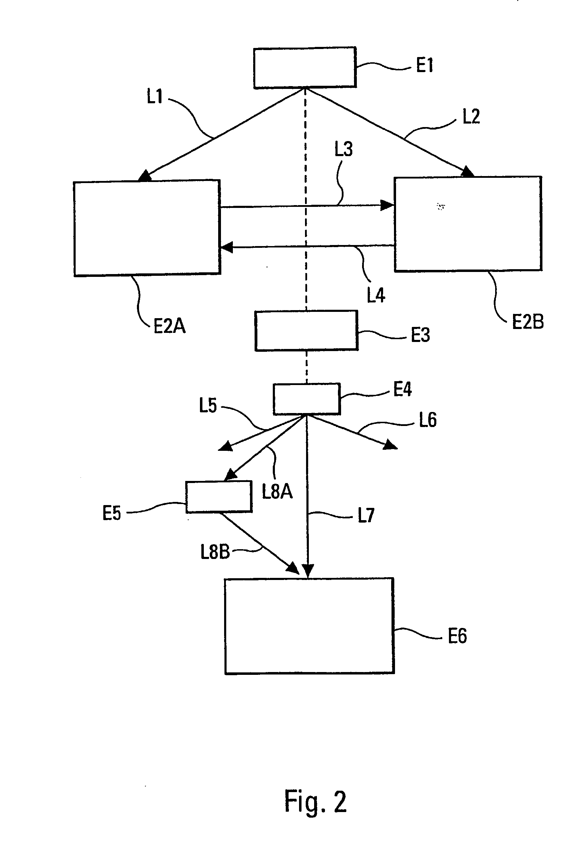

La figure 2 représente schématiquement le procédé conforme à l'invention mis en oeuvre par le dispositif 1 représenté sur la figure 1.

Comme indiqué ci-dessus, lorsque le dispositif d'alerte de collision 2 émet un avertissement (étape E1), deux solutions sont possibles, selon que le pilote automatique 5 est engagé (liaison L1) ou est désengagé (liaison L2) au moment de l'émission de cet avertissement.

Si le pilote automatique 5 est engagé (étape E2A), le pilote automatique 5 commande une pente correspondant à ladite valeur prédéterminée. En revanche, si le pilote automatique 5 n'est pas engagé (étape E2B) et si l'aéronef A comporte des commandes de vol électriques, la pente de l'aéronef A est maintenue sur ladite valeur prédéterminée, en l'absence d'une action du pilote (sur l'organe de commande 6), par la fonction 14 dudit calculateur 7 qui, dans ce cas, gère les lois de pilotage desdites commandes de vol électriques. Dans cette situation, un ordre (ou une consigne de pente) correspondant à une action du pilote sur l'organe de commande 6, est ajoutée le cas échéant à ladite valeur prédéterminée, par ledit calculateur 7. On notera qu'il existe une continuité des modes de pilotage selon que le pilote automatique 5 est engagé ou désengagé. En effet, les fonctions 13 et 14 mettent en oeuvre le même type de lois de pilotage. Ceci permet une cohérence de comportement de l'aéronef A quel que soit le mode de pilotage choisi par le pilote.

Sur la figure 2, on a représenté :
- une liaison L3 illustrant une reprise en main de l'aéronef A par le pilote, c'est-à-dire un désengagement du pilote automatique 5 ; et
- une liaison L4 illustrant un engagement par le pilote du pilote automatique 5 (initialement désengagé).

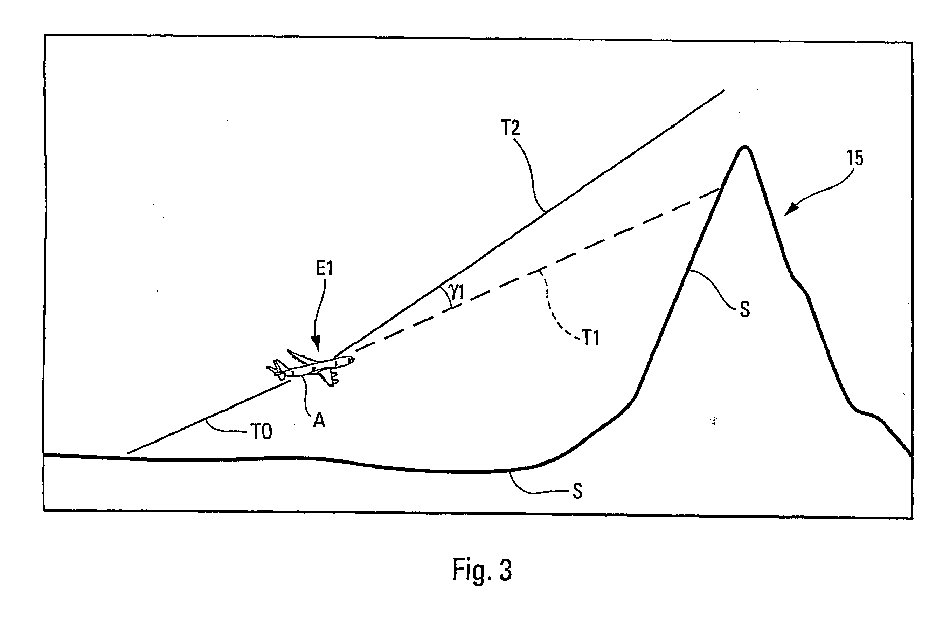

Sur la figure 3, on a représenté un exemple illustrant lesdites étapes E1, E2A et E2B. Cet exemple concerne une montée initiale de l'aéronef A selon une trajectoire T0. L'aéronef A est représenté au moment de l'émission de l'avertissement (étape E1). Il risque en effet d'entrer en collision avec le terrain S (montagne 15) s'il poursuit le vol tel quel, comme illustré par une trajectoire T1 (en traits interrompus) en prolongement de la trajectoire actuelle T0. A ce moment, le dispositif 1 soumet l'aéronef A automatiquement à un ordre de remontée supplémentaire présentant une pente γ1 qui est ajoutée à la pente correspondant à la trajectoire actuelle T0 de sorte que l'aéronef A ne suit alors plus la trajectoire T1 dans le prolongement de la trajectoire actuelle T0, mais une trajectoire T2 de remontée supplémentaire.

Comme illustré par cet exemple, lorsque le pilote exerce une action sur l'organe de commande 6 de l'aéronef A (générant la pente de la trajectoire T0), la fonction 14 du calculateur 7 ajoute ledit ordre de remontée (pente γ1) à l'ordre qui est engendré par ladite action du pilote sur ledit organe de commande 6.

Le dispositif 1 conforme à l'invention présente l'avantage d'agir précocement sur la trajectoire de l'aéronef A de façon à éviter une collision de celui-ci avec le terrain S. En effet, ledit dispositif 1 permet de mettre l'aéronef A sur une pente positive (remontée) dès qu'un avertissement est émis, même si le pilote ne réagit pas à cet avertissement. Ainsi, dès cet avertissement, on agit de façon à améliorer la situation de l'aéronef A par rapport au terrain S en augmentant son altitude.

De plus, cette action correspond à une première pente γ1 qui est de préférence modérée, généralement de l'ordre de quelques degrés (par exemple 2°), dont l'effet n'est donc pas pénalisant pour le confort des passagers de l'aéronef A.

On notera que l'aéronef A ne peut être maintenu en descente (pente négative) qu'en cas d'action volontaire et maintenue du pilote sur l'organe de commande 6. Le dispositif 1 conforme à l'invention est donc avantageux par rapport à l'art antérieur, puisque lors de l'émission d'un avertissement, l'aéronef A a tendance à remonter, sauf s'il y a une action volontaire du pilote pour le faire descendre. De plus, le fait que l'aéronef A remonte sans action volontaire du pilote présente l'avantage de contribuer à une prise de conscience par ledit pilote du risque de collision avec le terrain S (puisque normalement l'aéronef A ne monte pas sans action volontaire du pilote).

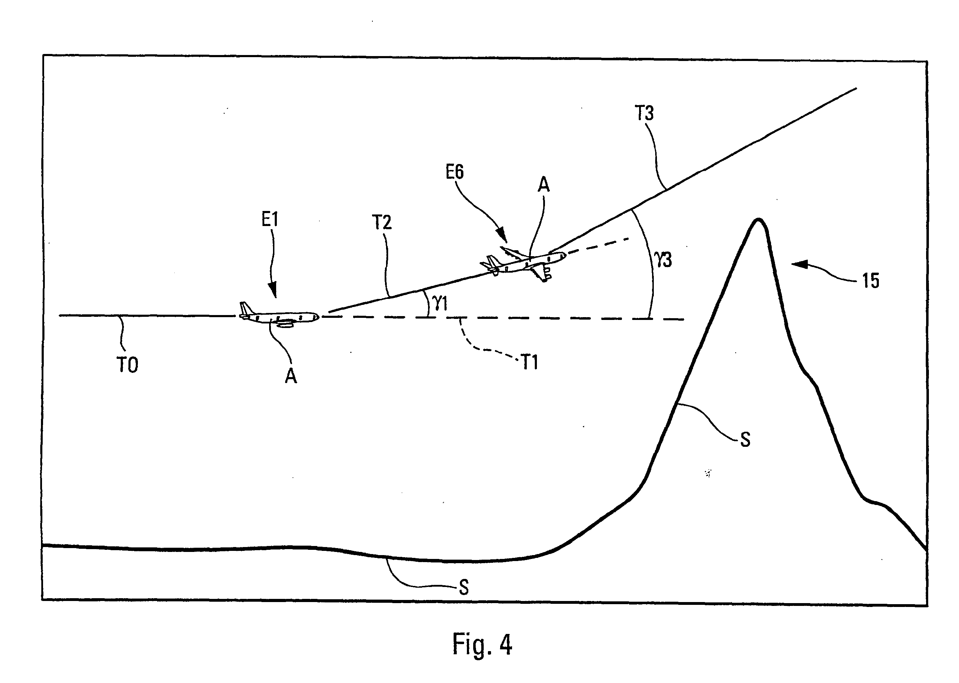

Si le pilote ne réagit pas à une situation d'avertissement et/ou si la remontée de l'aéronef A correspondant à l'étape E2A, E2B précitée n'est pas suffisante pour supprimer le risque de collision avec le terrain S (comme représenté sur la figure 4), le dispositif d'alerte de collision 2 émet de façon usuelle une alerte (étape E3).

Dans ce cas, dans un mode préféré de réalisation, on attend (étape E4) pendant une durée prédéterminée (par exemple 5 secondes) pour laisser au pilote la possibilité d'effectuer une action appropriée. Le pilote peut alors effectuer une action visant à éviter cette collision (liaison L5), s'il juge l'alerte justifiée. Il peut également annuler l'alerte (liaison L6), s'il la juge erronée ou injustifiée. Si au bout de cette durée prédéterminée, le pilote n'a effectué aucune action visant à éviter cette collision et s'il n'a pas annulé cette alerte, le pilote automatique 5 force automatiquement (liaison L7) une montée de l'aéronef à pente maximale (étape E6), comme indiqué précédemment, s'il est engagé.

Dans le cas où il n'est pas engagé, le pilote automatique 5 est engagé automatiquement (étape E5, liaisons L8A et L8B) avant de forcer de façon automatique une montée de l'aéronef A à pente maximale (étape E6).

Sur la figure 4, on a représenté un exemple illustrant les étapes précitées du procédé conforme à l'invention dans le cas particulier d'un vol en palier. Malgré une montée avec une pente γ1 à l'émission de l'avertissement (étape E1), le risque de collision avec le terrain S (montagne 15) subsiste de sorte qu'à l'étape E6, le pilote automatique 5 réalise une montée à pente maximale γ3.

On notera que le dispositif 1 conforme à l'invention permet une réaction progressive selon le niveau de l'alarme : une première réaction modérée en cas d'avertissement, puis une réaction plus brusque en cas d'alerte. Ceci permet d'anticiper le plus tôt possible une remontée de l'aéronef A, sans affecter notablement le confort des passagers, puis de n'engager une montée brusque que lorsque celle-ci devient indispensable pour sauver l'aéronef A d'une collision.

Dans un mode de réalisation préféré, le pilote automatique 5 force l'aéronef A à une remontée avec une poussée des moteurs (non représentés) de l'aéronef A, correspondant à la poussée maximale possible dans les conditions de vol actuelles de l'aéronef A.

De plus, selon l'invention, à l'aide d'un moyen 16 usuel qui est relié par une liaison 17 au pilote automatique 5, un pilote de l'aéronef A peut désengager (à tout moment) le pilote automatique 5, lorsqu'il est engagé, et piloter manuellement l'aéronef A.

En outre, selon l'invention, le pilote automatique 5 force la remontée de l'aéronef A, en maintenant l'angle d'incidence de l'aéronef A inférieur à une valeur maximale autorisée, relativement à la protection par rapport au décrochage.

Lorsque les deux alarmes (avertissement et alerte) deviennent inactives, l'aéronef A est ramené dans un domaine de vitesses opérationnelles (c'est-à-dire à une vitesse comprise entre les valeurs minimale et maximale sélectionnables par le pilote, étant donné que la mise en oeuvre du procédé conforme à l'invention peut entraîner exceptionnellement une vitesse inférieure à ladite valeur minimale) et dans des modes habituels de fonctionnement (à savoir les mêmes modes que ceux qui suivent une remise des gaz au moyen du pilote automatique 5).

## Revendications

1. Procédé d'évitement de terrain (S) pour un aéronef (A), procédé selon lequel on utilise un dispositif d'alerte de collision (2) susceptible d'émettre :
- un avertissement, lorsque l'aéronef (A) risque une collision avec le terrain (S) à la fin d'une première durée prédéterminée, s'il maintient ses caractéristiques de vol actuelles ; et
- une alerte, lorsque l'aéronef (A) risque une collision avec le terrain (S) à la fin d'une seconde durée prédéterminée, s'il maintient ses caractéristiques de vol actuelles, ladite seconde durée prédéterminée étant inférieure à ladite première durée prédéterminée,
**caractérisé en ce que :**
a) si ledit dispositif d'alerte de collision (2) émet un avertissement, on soumet automatiquement l'aéronef (A) au moins à un ordre de remontée avec une première pente (γ1) correspondant à une valeur prédéterminée ; et
b) si ledit dispositif d'alerte de collision (2) émet une alerte, un pilote automatique (5) de l'aéronef (A), qui est engagé automatiquement s'il est désengagé au moment de l'émission de ladite alerte, force automatiquement et exclusivement l'aéronef (A) à une remontée avec une seconde pente (γ3) correspondant à la pente maximale possible dans les conditions de vol actuelles de l'aéronef (A).

2. Procédé selon la revendication 1,
**caractérisé en ce que**, dans le cas où le pilote exerce une action sur un organe de commande (6) de l'aéronef (A), à l'étape a), on ajoute ledit ordre de remontée à l'ordre qui est engendré par ladite action du pilote sur ledit organe de commande (6).

3. Procédé selon l'une des revendications 1 et 2,
**caractérisé en ce que**, dans le cas où l'aéronef (A) est en montée, à l'étape a), on ajoute ledit ordre de remontée à la pente correspondant à cette montée.

4. Procédé selon l'une des revendications 1 à 3,
**caractérisé en ce qu**'à l'étape b), le pilote automatique (5) force l'aéronef (A) à une remontée avec une poussée engendrée par des moteurs de l'aéronef (A), correspondant à la poussée maximale possible dans les conditions de vol actuelles de l'aéronef (A).

5. Procédé selon l'une des revendications 1 à 4,
**caractérisé en ce qu**'à l'étape b), un pilote de l'aéronef (A) peut désengager le cas échéant le pilote automatique (5) engagé et piloter manuellement l'aéronef (A).

6. Procédé selon l'une quelconque des revendications précédentes,
**caractérisé en ce qu**'à l'étape b), le pilote automatique (5) force la remontée de l'aéronef (A), en maintenant l'angle d'incidence de l'aéronef (A) inférieur à une valeur maximale autorisée, relativement à la protection par rapport au décrochage.

7. Procédé selon l'une quelconque des revendications précédentes,
**caractérisé en ce qu**'à l'étape b), le pilote automatique (5) commence à forcer la remontée de l'aéronef (A) à la fin d'une troisième durée prédéterminée après l'émission de l'alerte, si aucune action n'est réalisée antérieurement pour éviter la collision avec le terrain (S).

8. Procédé selon l'une quelconque des revendications précédentes,
**caractérisé en ce que** ladite valeur prédéterminée de la première pente (γ1) est égale à 2°.

9. Dispositif d'évitement de terrain (S) pour un aéronef (A), ledit dispositif (1) comportant un dispositif d'alerte de collision (2) susceptible d'émettre :
- un avertissement, lorsque l'aéronef (A) risque une collision avec le terrain (S) à la fin d'une première durée prédéterminée, s'il maintient ses caractéristiques de vol actuelles ; et
- une alerte, lorsque l'aéronef (A) risque une collision avec le terrain (S) à la fin d'une seconde durée prédéterminée, s'il maintient ses caractéristiques de vol actuelles, ladite seconde durée prédéterminée étant inférieure à ladite première durée prédéterminée,
**caractérisé en ce qu**'il comporte de plus un système de pilotage (3) de l'aéronef (A), comprenant au moins :
- un moyen de pilotage (4) permettant de soumettre automatiquement l'aéronef (A) au moins à un ordre de remontée avec une première pente (γ1) correspondant à une valeur prédéterminée, lorsque ledit dispositif d'alerte de collision (2) émet un avertissement ; et
- un pilote automatique (5) qui est engagé automatiquement s'il est désengagé au moment de l'émission d'une alerte par ledit dispositif d'alerte de collision (2) et qui force automatiquement et exclusivement l'aéronef (A) à une remontée avec une seconde pente (γ3) correspondant à la pente maximale possible dans les conditions de vol actuelles de l'aéronef (A), lors de l'émission d'une telle alerte par ledit dispositif d'alerte de collision (2).

10. Dispositif selon la revendication 9,
**caractérisé en ce que** ledit moyen de pilotage (4) comprend une première fonction (13) qui est intégrée dans ledit pilote automatique (5), et **en ce que** ladite première fonction (13) soumet l'aéronef (A) audit ordre de remontée si ledit pilote automatique (5) est engagé lors de l'émission d'un avertissement.

11. Dispositif selon l'une des revendications 9 et 10,
**caractérisé en ce que** ledit système de pilotage (3) comporte, de plus, au moins un organe de commande (6) qui est susceptible d'être actionné par un pilote de l'aéronef (A), **en ce que** ledit moyen de pilotage (4) comprend une seconde fonction (14) qui est intégrée dans un calculateur (7) gérant les ordres engendrés par l'actionnement dudit organe de commande (6), et **en ce que** ladite seconde fonction (14) soumet l'aéronef (A) audit ordre de remontée si ledit pilote automatique (S) est désengagé lors de l'émission d'un avertissement.

12. Aéronef,
**caractérisé en ce qu**'il comporte un dispositif (1) tel que celui spécifié sous l'une quelconque des revendications 9 à 11.

## Claims

1. A terrain (S) avoidance method for an aircraft (A), a method according to which there is used a collision warning device (2) capable of transmitting:
- a caution, when the aircraft (A) risks having a collision with the terrain (S) at the end of a first predetermined period of time if it maintains its current flight characteristics; and
- a warning, when the aircraft (A) risks having a collision with the terrain (S) at the end of a second predetermined period of time if it maintains its current flight characteristics, the said second predetermined period of time being shorter than the said first predetermined period of time,
**characterized in that** :
a) if the said collision warning device (2) transmits a caution, the aircraft (A) is automatically subjected to at least one climb command with a first gradient (γ1) corresponding to a predetermined value; and
b) if the said collision warning device (2) transmits a warning, an automatic pilot (5) of the aircraft (A), which is engaged automatically if it is disengaged at the time of the transmission of the said warning, automatically and exclusively forces the aircraft (A) to climb with a second gradient (γ3) corresponding to the maximum gradient possible in the current flight conditions of the aircraft (A).

2. The method as claimed in Claim 1,
**characterized in that**, in the case where the pilot carries out an action on a control device (6) of the aircraft (A), in step a), the said climb command is added to the command which is generated by the said action of the pilot on the said control device (6).

3. The method as claimed in any one of claims 1 and 2,
**characterized in that**, in the case where the aircraft (A) is in a climb, in step a), the said climb command is added to the gradient corresponding to that climb.

4. The method as claimed in any one of Claims 1 to 3,
**characterized in that**, in step b), the automatic pilot (5) forces the aircraft (A) into a climb with a thrust generated by engines of the aircraft (A), corresponding to the maximum thrust possible in the current flight conditions of the aircraft (A).

5. The method as claimed in any one of Claims 1 to 4,
**characterized in that**, in step b), a pilot of the aircraft (A) can, if necessary, disengage the engaged automatic pilot (5) and pilot the aircraft (A) manually.

6. The method as claimed in any one of the preceding Claims,
**characterized in that**, in step b), the automatic pilot (5) forces the aircraft (A) to climb whilst maintaining the angle of incidence of the aircraft (A) below a maximum authorized value, in relation to protection with respect to stalling.

7. The method as claimed in any one of the preceding Claims,
**characterized in that**, in step b), the automatic pilot (5) starts to force the aircraft (A) to climb at the end of a third predetermined period of time after the transmission of a warning, if no action has previously been taken to avoid the collision with the terrain (S).

8. The method as claimed in any one of the preceding Claims,
**characterized in that**, the said predetermined value of the first gradient (γ1) is equal to 2°.

9. Terrain (S) avoidance device for an aircraft (A), the said device (1) comprising a collision warning device (2) capable of transmitting:
- a caution, when the aircraft (A) risks having a collision with the terrain (S) at the end of a first predetermined period of time if it maintains its current flight characteristics; and
- a warning, when the aircraft (A) risks having a collision with the terrain (S) at the end of a second predetermined period of time if it maintains its current flight characteristics, the said second predetermined period of time being shorter than the said first predetermined period of time,
**characterized in that**, it furthermore comprises a piloting system (3) of the aircraft (A), comprising at least:
- a means of piloting (4) making it possible to subject the aircraft (A) automatically to at least one climb command with a first gradient (γ1) corresponding to a predetermined value, when the said collision warning device (2) transmits a caution; and
- an automatic pilot (5) which is engaged automatically, if it is disengaged at the time of transmission of a warning by the said collision warning device (2), and which forces the aircraft (A), automatically and exclusively, into a climb with a second gradient (γ3) corresponding to the maximum gradient possible in the current flight conditions of the aircraft (A), at the time of the transmission of such a warning by the said collision warning device (2) .

10. The device as claimed in Claim 9,
**characterized in that**, the said means of piloting (4) comprises a first function (13) which is integrated in the automatic pilot (5) and wherein the said first function (13) subjects the aircraft (A) to the said climb command, if the said automatic pilot (5) is engaged at the time of the transmission of a caution.

11. The device as claimed in any one of Claims 9 and 10,
**characterized in that**, the said piloting system (3) furthermore comprises at least one control device (6) which is able to be actuated by a pilot of the aircraft (A), and wherein the said piloting means (4) comprises a second function (14) which is integrated in a calculator (7) managing the commands generated by the actuation of the said control device (6), and wherein the said second function (14) subjects the aircraft (A) to the said climb command if the said automatic pilot (S) is disengaged at the time of the transmission of a caution.

12. An aircraft, wherein it comprises a device (1) as claimed in any one of Claims 9 to 11.

## Patentansprüche

1. Verfahren zur Bodenkollisionsvermeidung (S) für ein Flugzeug (A), wobei verfahrensgemäß eine Vorrichtung zum Kollisionsalarm (2) verwendet wird, die senden kann:
- eine Warnung, wenn das Flugzeug (A) Gefahr läuft, mit dem Gelände (S) am Ende einer ersten vorbestimmten Zeitdauer zu kollidieren, wenn es seine aktuellen Flugkennwerte beibehält; und
- einen Alarm, wenn das Flugzeug (A) Gefahr läuft, mit dem Gelände (S) am Ende einer zweiten vorbestimmten Zeitdauer zu kollidieren, wenn es seine aktuellen Flugkennwerte beibehält, wobei die zweite vorbestimmte Zeitdauer kleiner ist als die erste vorbestimmte Zeitdauer,
**dadurch gekennzeichnet, dass**:
a) wenn die Vorrichtung zum Kollisionsalarm (2) eine Warnung abgibt, das Flugzeug (A) automatisch wenigstens einem Befehl zum Anstieg mit einer ersten Steigung (γ1) entsprechend einem vorbestimmten Wert unterzogen wird; und
b) wenn die Vorrichtung zum Kollisionsalarm (2) einen Alarm abgibt, ein Autopilot (5) des Flugzeugs (A), der automatisch eingeschaltet wird, wenn er im Augenblick der Abgabe des Alarms ausgeschaltet ist, automatisch und ausschließlich das Flugzeug (A) zu einem Anstieg mit einer zweiten Steigung (γ3) entsprechend der maximal möglichen Steigung unter den aktuellen Flugbedingungen des Flugzeugs (A) zwingt.

2. Verfahren nach Anspruch 1,
**dadurch gekennzeichnet, dass** in dem Fall, in welchem der Pilot eine Aktion auf ein Steuerorgan (6) des Flugzeugs (A) ausübt im Schritt a), der Befehl zum Anstieg dem Befehl hinzugefügt wird, der durch die Aktion des Piloten auf das Steuerorgan (6) erzeugt wird.

3. Verfahren nach einem der Ansprüche 1 und 2,
**dadurch gekennzeichnet, dass** in dem Fall das Flugzeug (A) im Steigflug ist im Schritt a), der Befehl zum Anstieg der diesem Steigflug entsprechenden Steigung hinzugefügt wird.

4. Verfahren nach einem der Ansprüche 1 bis 3,
**dadurch gekennzeichnet, dass** am Schritt b) der Autopilot (5) das Flugzeug (A) zu einem Anstieg mit einem durch die Motoren des Flugzeugs (A) erzeugten Schub zwingt, der dem maximal möglichen Schub unter den aktuellen Flugbedingungen des Flugzeugs (A) entspricht.

5. Verfahren nach einem der Ansprüche 1 bis 4,
**dadurch gekennzeichnet, dass** am Schritt b) ein Pilot des Flugzeugs (A) gegebenenfalls den eingeschalteten Autopiloten (5) ausschalten und das Flugzeug (A) manuell steuern kann.

6. Verfahren nach einem der vorstehenden Ansprüche,
**dadurch gekennzeichnet, dass** am Schritt b) der Autopilot (5) den Anstieg des Flugzeugs (A) unter Beibehaltung des Anstellwinkels des Flugzeugs (A) zwingt, der kleiner ist als ein maximal zulässiger Wert bezüglich des Schutzes gegenüber einem Absturz.

7. Verfahren nach einem der vorstehenden Ansprüche,
**dadurch gekennzeichnet, dass** am Schritt b) der Autopilot (5) damit beginnt, den Anstieg des Flugzeugs (A) am Ende einer dritten vorbestimmten Zeitdauer nach Abgabe des Alarms zu erzwingen, wenn keine Aktion vorher ausgeführt wurde, um die Kollision mit dem Gelände (S) zu vermeiden.

8. Verfahren nach einem der vorstehenden Ansprüche,
**dadurch gekennzeichnet, dass** der vorbestimmte Wert der ersten Steigung (γ1) gleich 2° ist.

9. Vorrichtung zur Geländeausweichung (S) für ein Flugzeug (A), wobei die Vorrichtung (1) eine Vorrichtung zum Kollisionsalarm (2) umfasst, die abgeben kann:
- eine Warnung, wenn das Flugzeug (A) Gefahr läuft, mit dem Gelände (S) am Ende einer ersten vorbestimmten Zeitdauer zu kollidieren, wenn es seine aktuellen Flugkennwerte beibehält; und
- einen Alarm, wenn das Flugzeug (A) Gefahr läuft, mit dem Gelände (S) am Ende einer zweiten vorbestimmten Zeitdauer zu kollidieren, wenn es seine aktuellen Flugkennwerte beibehält, wobei die zweite vorbestimmte Zeitdauer kleiner als die erste vorbestimmte Zeitdauer ist,
**dadurch gekennzeichnet, dass** sie ferner ein Steuerungssystem (3) des Flugzeugs (A) umfasst mit wenigstens:
- einem Steuermittel (4), welches ermöglicht, das Flugzeug (A) wenigstens einem Befehl für einen Anstieg mit einer ersten Steigung (γ1) entsprechend einem vorbestimmten Wert automatisch zu unterziehen, wenn die Vorrichtung zum Kollisionsalarm (2) eine Warnung abgibt; und
- einem Autopiloten (5), der automatisch eingeschaltet wird, wenn er im Augenblick der Abgabe eines Alarms durch die Vorrichtung zum Kollisionsalarm (2) ausgeschaltet ist, und der automatisch und ausschließlich das Flugzeug (A) zu einem Anstieg mit einer zweiten Steigung (γ3) entsprechend der maximal möglichen Steigung unter den aktuellen Flugbedingungen des Flugzeugs (A) bei Abgabe eines solchen Alarms durch die Vorrichtung zum Kollisionsalarm (2) zwingt.

10. Vorrichtung nach Anspruch 9,
**dadurch gekennzeichnet, dass** das Steuermittel (4) eine erste Funktion (13) umfasst, die in dem Autopiloten (5) integriert ist, und dass die erste Funktion (13) das Flugzeug (A) dem Befehl zum Anstieg unterzieht, wenn der Autopilot (5) bei der Abgabe einer Warnung eingeschaltet ist.

11. Vorrichtung nach einem der Ansprüche 9 und 10,
**dadurch gekennzeichnet, dass** das Steuersystem (3) ferner wenigstens ein Steuerorgan (6) umfasst, das durch einen Piloten des Flugzeugs (A) betätigt werden kann, dass das Steuermittel (4) eine zweite Funktion (14), die in einen Rechner (7) integriert ist, der die durch Betätigung des Steuerorgans (6) erzeugten Befehle unterstützt, und dass die zweite Funktion (14) das Flugzeug (A) dem Befehl zum Anstieg unterzieht, wenn der Autopilot (5) bei der Abgabe einer Warnung ausgeschaltet ist.

12. Flugzeug,
**dadurch gekennzeichnet, dass** dieses eine Vorrichtung (1) umfasst, wie sie in einem der Ansprüche 9 bis 11 spezifiziert ist.
